# EUROPEAN PATENT SPECIFICATION

(11) **EP 0 366 417 B1**
(45) Date of publication and mention of the grant of the patent: **15.05.1996**
(21) Application number: 89310960.3
(22) Date of filing: 24.10.1989
(51) Int. Cl.: C04B 14/20

(54) **Vermiculite dispersions and method of preparing same**
Vermiculit-Dispersionen und Verfahren zu ihrer Herstellung
Dispersions de vermiculite et procédé pour leur production

(30) Priority: 24.10.1988 US 261880
(43) Date of publication of application: 02.05.1990
(73) Proprietor: W.R. Grace & Co.-Conn., New York, New York 10036 (US)
(72) Inventor: Ou, Chia-Chih, Lexington Massachusetts 02173 (US); Yang, Julie C., Lexington Massachusetts 02173 (US)
(74) Representative: Bentham, Stephen

(56) References cited:
- EP-A- 0 205 281
- EP-A- 0 212 930
- EP-A- 0 299 351
- US-A- 3 325 340
- US-A- 3 434 917
- H. MARK et al: "KIRK-OTHMER ENCYCLOPEDIA OF CHEMICAL TECHNOLOGY" vol. 5, 1979, Wiley & Sons., New York, US

## Description

This invention relates to delaminated vermiculite dispersions and a method of producing same.

The term vermiculite refers to the group of rock forming mineral species characterized by a layer latticed structure in which the silicate layer units have a thickness of approximately 1 nm (10 Å.) The main elements present in the layer are magnesium, aluminum, silicon and oxygen with the layers being separated by 1 or 2 sheets of water molecules associated with cations such as magnesium, calcium, sodium and hydrogen. The layers have considerable lateral extent relative to the thickness of the basic 1 nm (10 Å) unit layer. The term vermiculite as used herein therefore includes minerals consisting wholly or largely of vermiculite, or minerals of a mixed-layer type containing vermiculite layers as an important constituent, such as hydrobiotites, and chlorite-vermiculite, but does not include minerals of the montmorillonite group.

U. S. Patent No. 3,325,340 to G. Walker describes the production of dispersions of delaminated vermiculite and the production of films and coatings therefrom. The patent discloses that the dispersions can be prepared by treating vermiculite crystal with a solution containing a cation which can diffuse between the interlayers of the crystal's mineral structure and cause gross swelling in a direction normal to the main cleavage plane of the layer during immersion in water, immersing the treated vermiculite in water and permitting the swelling to occur, and shearing the swollen vermiculite to delaminate the layers and form a suspension of individual vermiculite flakes or platelets. The swelling of the vermiculite is believed to take place as a result of exchange of the cation of the treatment solution for the exchangeable cations of the vermiculite crystal. This cation exchange weakens the binding forces between the vermiculite platelets and thus allows swelling to occur in the presence of water. With the weakening of the binding forces and the swelling of the vermiculite, the individual platelets can be delaminated from one another under conditions of intense shearing, resulting in an aqueous suspension of the platelets, hereinafter referred to as a vermiculite dispersions.

As agents which can be used to promote the swelling of the vermiculite crystal, U. S. Pat. No. 3,325,340 specifically discloses the chloride salts of the following cations: n-butylammonium; iso-amylammonium; iso-butylammonium; n-propylammonium; the cationic form of amino acids, such as lysine or ornithine, and the lithium cation. The focus of the disclosure of this patent relative to promoting vermiculite swelling is the cation provided by these salts, since cation exchange is integral to effecting the desired swelling and delamination of the vermiculite. The anion provided by the salt used in the vermiculite treatment step is not indicated to be of importance in promoting the swelling of the vermiculite, or to otherwise affect the overall process for producing the dispersion.

As indicated by the above, the salts disclosed by U. S. Patent No. 3,325,340 for use in the vermiculite treatment step are chloride salts and, in general, the chloride salts have been the predominant materials used in the preparation of vermiculite dispersions. In particular, n-butylammonium chloride and lithum chloride have become widely used for effecting the vermiculite swelling.

It has been observed by the inventors that vermiculite dispersions which are provided by use of conventional swelling agents, such as the chloride salts discussed above, have a number of drawbacks. Those prepared using chloride salts generally contain residual chloride, which is corrosive and thus may be of concern where it is desired to apply the dispersion to various metals. In addition, dispersions produced with the chloride and various other salts tend to be unstable, in that the vermiculite platelets in these dispersions tend to reaggregate after a period of time, e.g., within one to twenty four hours, and settle out of the dispersions. Agitation of the settled dispersion is thus required prior to use and, depending on the degree of reaggregation and settling, vigorous agitation or further shearing may be necessary to regenerate a uniform dispersion. This can engender increased process costs in the use of the dispersion as a result of the additional time, labor, and equipment which may be required.

The production of a stable dispersion in which the vermiculite platelets do not settle on standing would eliminate these costs. Moreover, for forming coatings and films with vermiculite dispersions, a stable dispersion would facilitate and help assure a uniform application of vermiculite platelets to the substrate of choice.

Our European Patent Application 0212930 describes the preparation of vermiculite dispersions by the treatment of vermiculite crystals with a citrate anion and a cation to promote swelling of the crystals followed by delamination of the swollen crystals to form a suspension of vermiculite platelets.

This invention is directed to a process of swelling vermiculite using a non-citrate anionic chelating agent and preparing aqueous vermiculite dispersions from the swollen vermiculite, and to the resultant dispersions. Dispersions which are substantially free of settling can be prepared according to the process of this invention.

In its method aspects, the present invention is directed to the discovery that the chemically induced swelling of vermiculite which occurs using cationic swelling agents, e.g., those disclosed in the aforementioned Walker patent, is substantially enhanced if conducted in the presence of certain non-citrate anionic chelating agents. More particularly, it has been discovered that the conjuctive use of a cationic vermiculite swelling agent and a non-citrate anionic chelating agent which is able to form a chelation complex with one or more of the exchangeable metal cations of the vermiculite crystal results in an increased degree of swelling of the crystal, in comparison to that effected by the cationic swelling agent alone. In addition, it has been found that the enhanced swelling caused by the chelating agent results in dispersions of improved quality upon shearing of the swollen vermiculite. Thus, vermiculite dispersions which are substantially free of settling can be obtained. In addition, the use of non-citrate anionic chelating agents also allows the production of dispersions which are chloride-free, and thus non-corrosive. Thus, in contrast to the prior emphasis on the cation which is exchanged with the vermiculite, or on a particular anionic species, the method of this invention relates to the use of various chelating anionic species to provide desired improvements in the resultant dispersion.

This invention is accordingly directed in part to a method comprising the steps of treating crystals of vermiculite with (a) a cation which promotes swelling of the crystals in a direction normal to their main cleavage plane during immersion in water subsequent to the treatment and (b) a non-citrate anionic chelating agent which increases the degree of swelling effected by the cation; immersing the treated crystals in water; permitting the immersed crystals to swell; and, for the production of vermiculite dispersions, subjecting the resultant swollen crystals while immersed in water to a shearing force to form a dispersion of vermiculite platelets.

As used herein, the term "chelating agent" refers to any compound, other than citric acid or a citrate, containing electron donating atoms or groups that can combine by coordinate bonding with any of the exchangeable metal cations of the vermiculite crystal to form a chelation complex. The term "anionic chelating agent" refers to any of the anionic species of the chelating agent which may exist in solution, i.e., any of the partially or completely disassociated species.

Any non-citrate chelating agent which forms the above-mentioned chelation complex and provides the enhanced swelling of vermiculite may be used in the invention. The chelation agent will generally contain at least one acidic moiety such as a phosphoric, phosphonic, sulfonic, or preferably, carboxylic acid group. Polycarboxylic acids are especially preferred. It is also preferred that the electron donating groups or atoms are spatially positioned to provide a five or six membered ring upon coordinate bonding with the metal cation. In general, such chelating agents are well known (cf. Kirk-Othmer, Encyclopedia of Chemical Technology, 3rd ed., vol.5, 1979 pp. 339-368) and, in particular, the chelating agents commonly used for the sequestering of magnesium or calcium ions are well known materials that are particularly useful in this invention. Particular chelating agents which can be used are the anions of ethylenediamine tetraacetic acid, nitrilotriacetic acid, cyclohexane trans-1,2-diamino tetraacetic acid, lactic acid, oxalic acid, tricarballylic acid, and hydroxyethylethylenediamine tetraacetic acid. In particular, nitrogen-containing chelating agents, such as ethylenediamine tetraacetic acid and cyclohexane trans-1,2-diamino tetraacetic acid, may be used.

The chelating agent preferably provides at least a 10% increase in maximum swelling volume, as compared to the swelling effected by the cationic swelling agent alone, and more preferably provides at least a 50% increase in maximum swelling volume.

In a typically conducted process of the invention, the vermiculite crystal is provided as the naturally occurring mineral, i.e., as particles of unexfoliated vermiculite ore. The ore particles are immersed in an aqueous treatment bath containing the anionic chelating agent and a soluble cation capable of exchanging with one or more interlayer cations of the vermiculite lattice and promoting swelling as described above. The treatment bath may be prepared by dissolving in water a chelating agent salt and a salt of the desired cation. Thus, any of the salts taught in U. S. Pat. No. 3,325,340, for example, may be used in the present invention, in conjunction with the use of the chelating agent. Where such a mixture of salts is used, the chelating agent salt need not comprise a cation which can exchange with the vermiculite to promote swelling.

A common solution of both salts can be prepared and used to treat the vermiculite, i.e., the vermiculite is immersed in the solution and thus exposed to both ionic moieties simultaneously. Alternatively, the vermiculite may be treated sequentially with the ions, either by use of separate salt solutions or by later addition of one of the salts to a single treatment bath. It is generally preferred to employ treatment baths in which the cation concentration is at least 0.2 N.

Rather than using individual salts of the cation and chelating agent, a water soluble chelating agent salt of a cation which can exchange with vermiculite to promote swelling can be used. In general, such a chelating agent salt will be the only swelling agent which is used to treat the vermiculite, although conventional swelling agents may also be present, if desired, in the treatment bath. The chelating agent salt of any of the cations known to undergo exchange with one or more of the interlayer cations of vermiculite so as to promote swelling in the manner described above may be used in this invention, e.g., alkylammonium salts having 3 to 6 carbon atoms in each alkyl group, the salts of amino acids, or, preferably, lithium salts of the chelating agent.

The anionic chelating agent can also be generated in situ in the treatment bath through the reaction of acidic groups on the chelating agent with a basic group capable of dissociating the acid. The basic group may be provided by addition of a separate base such as hydroxide to the treatment bath or as the anion of a salt of the cationic exchanging agent. The latter method may be illustrated by, for example, the addition of ethylenediamine tetraacetic acid and lithium hydroxide or lithium carbonate to the treatment bath to generate the lithium salt of ethylenediamine tetraacetic acid.

The concentration of anionic chelating agent which can be used in the treatment bath is in the range of about 0.02 N up to a saturation concentration. Where the anionic chelating agent is used in association with a salt which is capable of promoting swelling of vermiculite, a lower concentration, e.g., 0.02 N to 0.20 N may be suitable to enhance the swelling and provide a stable dispersion. Where a chelating agent salt of an exchangeable cation is used as the sole swelling agent, it is preferred to use a higher concentration in the range of about 0.5 N up to a saturation concentration. A preferred range of anionic chelating agent concentration is about 0.5 N to 4 N.

The vermiculite can usually be treated satisfactorily with the anionic chelating agent and the exchangeable cation by immersion in a bath containing these ions for about 2 to 24 hours at room temperature with occasional stirring. This process can, however, be accelerated by more vigorous stirring or the application of heat. After completion of the treatment step, the ore is separated from the bulk of the treatment bath, e.g., by filtration or decantation. The treated ore is then immersed in water which is substantially free of electrolyte so as to create an electrolyte concentration gradient between the interior of the vermiculite ore particles and the surrounding medium. This gradient is believed to generate osmotic pressures which cause separation or partial delamination of the individual layers of the vermiculite and overall swelling of the ore particle.

Generally, the treated vermiculite particles are immersed in water for about 5 to 15 minutes at room temperature, the water decanted, and a quantity of fresh water added, and this process is repeated several times to achieve maximum swelling and the removal of substantially all of the ions in solution.

It has been found that the swelling begins almost instantaneously and that the maximum volume can be reached in an exceedingly short period of time, e.g., less than one hour. This may be contrasted with the swelling time to reach maximum volume of at least several hours observed with conventional swelling agents such as lithium chloride or n-butylammonium chloride.

The enhanced rate of swelling is obviously of advantage in minimizing the amount of time necessary to complete the preparative process. The increased degree of swelling is believed to facilitate the subsequent delamination of the vermiculite and the formation of a higher concentration of relatively thin platelets. The stability of the resultant dispersions and an enhanced degree of adhesiveness and cohesiveness observed in the resultant dispersions may, in part, be attributable to this higher concentration of thin platelets.

Subsequent to swelling, the final rinse bath is separated from the vermiculite and sufficient water is added to bring the vermiculite solids concentration to a desired level. The concentration may also be adjusted by addition or removal of water after delamination. Although the dispersions can be prepared to a vermiculite solids weight concentration of up to 20%, concentrations of less than 15% are normally preferred in order to attain a sufficiently low viscosity permitting easy handling and use. Weight concentrations in the range of about 4% to 12% are preferred, more preferably about 5% to 10%.

The delamination of the swollen vermiculite may be effected by the conventional means of high speed shearing which have been previously used, e.g., colloid mills, high speed blenders, homogenizers, and the like.

As indicated above, the cohesive and adhesive properties of the dispersions of this invention may exceed those of dispersions prepared similarly with a conventional swelling agent. For example, dispersions produced using the tetralithium salt of ethylenediamine tetraacetic acid as the swelling agent may bind glass particles better than dispersions produced using n-butylammonium chloride or lithium chloride as swelling agents. Films made by casting dispersions prepared using the tetralithium salt of ethylenediamine tetraacetic acid may have an average tensile strength which is three to four times that of films of dispersions prepared similarly Using lithium chloride. The dispersions can be used to prepare films having a tensile strength of at least about 2.11 Gg/m² (3000 psi) and, generally, in the range of about 2.11 Gg/m² (3000 psi) to 8.44 Gg/m² (12,000 psi). Preferred films are those having a tensile strength of at least about 7000 psi. The tensile strengths described herein refer to those measured by pulling oven-dried films in the direction of draw down of the dispersion at a rate of 13 mm/min (0.5 in./min.)

Insofar as the present invention provides an enhanced rate or degree of vermiculite swelling, or improved stability, adhesiveness, or cohesiveness in the vermiculite dispersions, it should be understood that the degree of improvement which is obtained may vary with the geographic origin of the vermiculite ore.

The dispersions of this invention can be used in any application for which vermiculite dispersions in general have been known. The dispersions can be used in the making of non-burning papers, e.g., as disclosed in U. S. Pat. Nos. 3,434,917 and 3,654,073 and in the published report of the Closed Systems Division of the National Aeronautic and Space Administration entitled "Development of Inorganic Nonflammable Vermiculite Flight Paper", contract NAS 9-7782, published in 1969. The dispersions of this invention can also be used to form fireproofing coatings on combustible materials such as cellulose fibers, as disclosed, for example, in U. S. Pat. No. 3,540,892, and non-combustible fibers to upgrade their fire and heat resistance, e.g., as in U. S. Pat. No. 3,654,073.

A coating of the lamallae may be prepared by applying the dispersion to a substrate and removing the aqueous carrier, e.g., by evaporation. The substrate may be in any suitable form such as an individual fiber, a sheet, a woven or non-woven mat or a block. The substrate may be a combustible material, e.g., a cellulosic fiber material or a naturally occurring or synthetic organic polymer, or a non-combustible material such as glass, fiberglass, or metal. If the substrate is porous to the dispersion, as with most fiberglass mats, for example, the coating may derive from impregnation of the substrate. The dispersions may also be used as binder layers in laminates, either alone or in conjunction with an additional binder material.

Coatings prepared from the dispersions of this invention may display improved bonding to the substrate as a result of the increased adhesiveness of the dispersion deriving from the use of the anionic chelating agent. In those applications where the dispersion also serves a binding function, such as in papers and impregnated fibrous mats, greater tear strengths or tensile strengths may be obtained, deriving from the improved properties of the dispersion. Similarily, laminates containing layers of the dispersion as an adhesive may have greater integrity and strength, and a lesser tendency to delaminate under conditions of use.

The dispersions of this invention may also be coated onto a support, dried, and removed therefrom to provide a self-supporting film of vermiculite lamallae. These films have enhanced strength and may be used, for example, as fireproof facings on a variety of substrates.

The present invention is further described by the following Examples, which are illustrative only and not intended to be of limiting effect.

### EXAMPLE 1

A 3.0 N solution of tetralithium ethylenediamine tetraacetic acid (Li-EDTA) was prepared by slowly adding 473 grams of EDTA (free acid form) to 239 grams of lithium carbonate in one kilogram of deionized water. After foaming had subsided, two kilograms of deionized water were added.

To the 3.0 N Li-EDTA solution were added 2.16 kilograms of No. 4 grade vermiculite from South Carolina. The mixture was stirred and then allowed to stand for 24 hours at room temperature. The resultant slurry was then filtered and rinsed with approximately 7 liters of water. The filter cake was then placed in deionized water and allowed to swell for approximately 25 minutes with agitation. The lighter weight swollen vermiculite was separated from heavier rock-like particles by collection of the vermiculite from the upper section of the swelling vessel and the collected slurry was concentrated by filtration. The concentrated slurry was sheared with the APV homogenizer at 2.11 Gg/m² (3000 psi).

A stable dispersion was obtained which displayed virtually no settling after standing for one month.

Films were prepared by drawing down the dispersion on a granite surface using a draw down bar set at 800 µm (30 mils) thickness and drying the deposited film at room temperature overnight. The dried films were die cut into 2.5 X 13 cm (1 X 5 inch) strips and dried at 60°C in a convection oven. The tensile strength of each strip was measured on an Instron set in the 0 to 9 kg (20 pound) range at a cross speed of 13 mm/min (0.5 inches per minute). The measured average tensile strength (10 samples) of the Li-EDTA dispersion was 2.220 Gg/m² (3158 psi).

These films showed a decrease in tensile strength upon exposure to ambient atmospheric conditions.

### EXAMPLE 2

A 1 N Li-EDTA solution was prepared by slowly adding 73.06 grams of technical grade EDTA to a stirred agueous slurry of reagent grade lithium carbonate and, after complete addition of the EDTA, adding sufficient water to bring the total volume to one liter.

A 1 N solution of Li-CDTA (tetralithium cyclohexane trans-1,2-diamino tetraacetic acid) was similarly prepared. 3 N solutions of lithium neutralized lactic acid, oxalic acid, and tricarballylic acid were similarly prepared.

A quantitative comparison of the swelling of vermiculite ore in the above chelating agent solutions was conducted by adding 50 grams of No. 4 grade South Carolina vermiculite to 50 ml. and 100 ml. of the Li-EDTA, Li-CDTA, and lithium oxalate solutions and to 50 ml. of the lithium lactate and lithium tricarballylate solutions. For comparison, 50 grams of the vermiculite was also added to 50 ml. of a 3 N lithium chloride solution. After adding the vermiculite, each mixture was stirred and then allowed to soak overnight. The mixtures were then dewatered by vacuum filtration using Whatman #40 filter paper, the ore washed once with about 20 ml. of water, and transferred to a 2000 ml. graduated cylinder. Approximately 500 ml. of water was added, the cylinder covered, and then inverted ten times. After five minutes, the water was decanted, another 500 ml. added and the procedure repeated. After again decanting, the cylinder was filled to the two liter mark, inverted ten times, and allowed to stand for 24 hours. The volumes of the swollen vermiculite samples in the cylinder were then noted and are given below in TABLE 1.

**TABLE 1**

| Chelating Agent Solution | Volume of Chelating Agent Solution (ml.) | 24 Hour Swelling Volume (ml.) |
|---|---|---|
| 1N Li-CDTA | 100 | 680 |
| 1N Li-EDTA | 100 | 670 |
| 1N Li-CDTA | 50 | 660 |
| 1N Li-EDTA | 50 | 640 |
| 3N Li Tricarballylate | 50 | 375 |
| 3N Li Lactate | 50 | 305 |
| 3N Li Cl | 50 | 265 |
| 3N Li Oxalate | 100 | 225 |

Especially good swelling results were observed using the EDTA and CDTA swelling agents, and all chelating agents other than oxalate showed improvement over lithium chloride. It is noted that lithium oxalate is only soluble in water up to concentrations of 1.5N and a considerable amount of precipitate was observed in the 3N solution. This resulted in a high ion concentration which apparently necessitates additional rinsing beyond that used in order to achieve the maximum potential swelling volume.

## Claims

1. A process for preparing an aqueous vermiculite dispersion which comprises:
treating vermiculite crystals with (a) a cation which promotes swelling of the crystals in a direction normal to their main cleavage plane during immersion in water subsequent to the treatment and (b) a non-citrate anionic chelating agent which increases the degree of swelling effected by the cation; immersing the treated crystals in water; allowing the immersed crystals to swell; and subjecting the resultant swollen crystals while immersed in water to a shearing force to delaminate the vermiculite crystal to form a suspension of delaminated vermiculite platelets.

2. A process according to claim 1 wherein the vermiculite crystals are treated by immersion in a treatment bath containing an aqueous solution of a salt of the anionic chelating agent and an aqueous solution of a salt of the cation.

3. A process according to claim 1 or 2, wherein the chelating agent contains at least one acidic moiety.

4. A process according to claim 1, 2 or 3, wherein the chelating agent contains at least one phosphoric, phosphonic, sulfonic or carboxylic acid group.

5. A process according to any one of the preceding claims wherein the chelating agent is a polycarboxylic acid.

6. A process according to any one of the preceding claims wherein the chelating agent is an anion of ethylenediamine tetraacetic acid, nitrilotriacetic acid, cyclohexane trans-1,2-diaminotetraacetic acid, lactic acid, oxalic acid, tricarballylic acid or hydroxyethyl-ethylenediamine tetraacetic acid.

7. A process according to any one of the preceding claims wherein the chelating agent is ethylenediamine tetraacetic acid.

8. A process according to any one of the preceding claims wherein the chelating agent is capable of sequestering magnesium or calcium ions.

9. A process according to any one of the preceding claims wherein the cation is a N-alkylammonium cation having 3 to 6 carbon atoms in each alkyl group, a cationic form of an amino acid, or a lithium cation.

10. A process according to claim 1 wherein the vermiculite crystals are treated simultaneously with the anionic chelating agent and the cation.

11. A process according to any one of the preceding claims wherein the vermiculite crystals are treated by immersion in a treatment bath comprising an aqueous solution of a chelating agent salt of the cation.

12. A process according to any one of the preceding claims wherein the cation is lithium.

13. A process according to any one of the preceding claims wherein the vermiculite crystals are treated by immersion in a treatment bath containing a solution comprising the anionic chelating agent in a concentration of from 0.02 N. up to a saturation concentration.

14. A process according to claim 13 wherein the concentration of the anionic chelating agent is from 0.5 N. to 4 N.

15. A process according to claim 11 wherein the concentration of the chelating agent salt of the cation is from 0.5 N. up to a saturation concentration.

16. A process according to claim 11 wherein the concentration of the non-citrate chelating agent salt of the cation is from 0.5 N. to 4 N.

17. A process according to any one of the preceding claims wherein the concentration of vermiculite platelets in the dispersion formed by shearing swollen vermiculite is less than 15% based on the weight of the dispersion.

18. A process according to claim 17 wherein the concentration of vermiculite platelets is from 4% to 12%.

19. A process according to any one of the preceding claims wherein the non-citrate anionic chelating agent substantially prevents the settling out of the platelets from the dispersion.

20. A process for increasing the rate and extent of swelling of vermiculite ore particles which comprises:
(a) treating vermiculite ore particles with (a) a cation which promotes swelling of the particles in a direction normal to their main cleavage plane during immersion in water subsequent to the treatment and (b) a non-citrate anionic chelating agent which increases the rate and extent of swelling effected by the cation;
(b) immersing the treated particles in water; and
(c) permitting the immersed particles to swell.

21. An aqueous dispersion comprising delaminated vermiculite platelets and a non-citrate anionic chelating agent, which is obtainable by a process as claimed in any one of the preceding claims.

22. A process according to any one of claims 1 to 20 followed by the preparation from the aqueous dispersion obtained of a self-supporting film or coating.

## Patentansprüche

1. Verfahren zur Herstellung einer wäßrigen Vermiculit-Dispersion, bei dem:
Vermiculitkristalle mit (a) einem Kation, das das Quellen der Kristalle in einer senkrecht zur Hauptaufspaltungsebene liegenden Richtung während des auf die Behandlung folgenden Eintauchens in Wasser fördert, und (b) einem anionischen Chelatisierungsmittel, das kein Citrat ist und das Ausmaß des durch das Kation bewirkten Quellens steigert,
die behandelten Kristalle in Wasser getaucht werden,
die eingetauchten Kristalle quellen gelassen werden und
die resultierenden gequollenen Kristalle, während sie in Wasser eingetaucht sind, einer Scherkraft ausgesetzt werden, um den Vermiculitkristall aufzublättern, so daß eine Suspension von aufgeblätterten Vermiculitplättchen gebildet wird.

2. Verfahren nach Anspruch 1, bei dem die Vermiculitkristalle behandelt werden, indem sie in ein Behandlungsbad getaucht werden, das eine wäßrige Lösung eines Salzes des anionischen Chelatisierungsmittels und eine wäßrige Lösung eines Salzes des Kations enthält.

3. Verfahren nach einem der Ansprüche 1 oder 2, bei dem das Chelatisierungsmittel mindestens einen sauren Rest enthält.

4. Verfahren nach einem der Ansprüche 1, 2 oder 3, bei dem das Chelatisierungsmittel mindestens eine Phosphorsäure-, Phosphonsäure-, Sulfonsäure- oder Carbonsäuregruppe enthält.

5. Verfahren nach einem der vorhergehenden Ansprüche, bei dem das Chelatisierungsmittel eine Polycarbonsäure ist.

6. Verfahren nach einem der vorhergehenden Ansprüche, bei dem das Chelatisierungsmittel ein Anion von Ethylendiamintetraessigsäure, Nitrilotriessigsäure, Cyclohexan-trans-1,2-diaminotetraessigsäure, Milchsäure, Oxalsäure, Tricarballylsäure oder Hydroxyethylethylendiamintetraessigsäure ist.

7. Verfahren nach einem der vorhergehenden Ansprüche, bei dem das Chelatisierungsmittel Ethylendiamintetraessigsäure ist.

8. Verfahren nach einem der vorhergehenden Ansprüche, bei dem das Chelatisierungsmittel Magnesium- oder Calciumionen maskieren kann.

9. Verfahren nach einem der vorhergehenden Ansprüche, bei dem das Kation ein N-Alkylammoniumkation mit 3 bis 6 Kohlenstoffatomen in jeder Alkylgruppe, eine Kationform einer Aminosäure oder ein Lithiumkation ist.

10. Verfahren nach Anspruch 1, bei dem die Vermiculitkristalle gleichzeitig mit dem anionischen Chelatisierungsmittel und dem Kation behandelt werden.

11. Verfahren nach einem der vorhergehenden Ansprüche, bei dem die Vermiculitkristalle behandelt werden, indem sie in ein Behandlungsbad getaucht werden, das eine wäßrige Lösung eines Chelatisierungsmittelsalzes des Kations umfaßt.

12. Verfahren nach einem der vorhergehenden Ansprüche, bei dem das Kation Lithium ist.

13. Verfahren nach einem der vorhergehenden Ansprüche, bei dem die Vermiculitkristalle behandelt werden, indem sie in ein Behandlungsbad getaucht werden, das eine Lösung enthält, die das anionische Chelatisierungsmittel in einer Konzentration von 0,02 N bis zu einer Sättigungskonzentration enthält.

14. Verfahren nach Anspruch 13, bei dem die Konzentration des anionischen Chelatisierungsmittels zwischen 0,5 N und 0,4 N liegt.

15. Verfahren nach Anspruch 11, bei dem die Konzentration des Chelatisierungsmittelsalzes des Kations zwischen 0,5 N und einer Sättigungskonzentration liegt.

16. Verfahren nach Anspruch 11, bei dem die Konzentration des Nicht-Citrat-Chelatisierungsmittelsalzes des Kations zwischen 0,5 N und 4 N liegt.

17. Verfahren nach einem der vorhergehenden Ansprüche, bei dem die Konzentration der Vermiculitplättchen in der Dispersion, die durch Scherung des gequollenen Vermiculits gebildet wurde, unter 15%, auf Basis des Gewichts der Dispersion, liegt.

18. Verfahren nach Anspruch 17, bei dem die Konzentration der Vermiculitplättchen zwischen 4% und 12% liegt.

19. Verfahren nach einem der vorhergehenden Ansprüche, bei dem das anionische Chelatisierungsmittel, das kein Citrat ist, im wesentlichen das Absetzen der Plättchen aus der Dispersion verhindert.

20. Verfahren zur Steigerung der Geschwindigkeit und des Ausmaßes der Quellung von Vermiculiterzteilchen, bei dem:
(a) Vermiculiterzteilchen mit (a) einem Kation behandelt werden, das die Quellung der Teilchen in einer Richtung, die senkrecht zu ihrer Hauptaufspaltungsebene liegt, während des an die Behandlung folgenden Eintauchens in Wasser fördert, und (b) einem anionischen Chelatisierungsmittel behandelt wird, das kein Citrat ist und die Geschwindigkeit und das Ausmaß des durch das Kation bewirkten Quellens steigert,
(b) die behandelten Teilchen in Wasser getaucht werden und
(c) die eingetauchten Teilchen quellen gelassen werden.

21. Eine wäßrige Dispersion, die aufgeblätterte Vermiculitteilchen und ein anionisches Chelatisierungsmittel umfasst, das kein Citrat ist, die durch ein Verfahren gemäß einem der vorhergehenden Ansprüche erhältlich ist.

22. Verfahren nach einem der Ansprüche 1 bis 20 mit anschließender Herstellung eines selbsttragendes Films oder einer selbsttragenden Beschichtung aus der erhaltenen wäßrigen Dispersion.

## Revendications

1. Procédé pour préparer une dispersion aqueuse de vermiculite qui consiste à :
traiter des cristaux de vermiculite avec (a) un cation qui provoque le gonflement des cristaux dans une direction normale à leur plan de clivage principal pendant l'immersion dans de l'eau après le traitement et (b) un agent de chélation anionique qui n'est pas du citrate et qui augmente le degré de gonflement effectué par le cation ; à immerger les cristaux traités dans l'eau ; à permettre aux cristaux immergés de gonfler ; et à soumettre les cristaux gonflés résultants alors qu'ils sont immergés dans l'eau à une contrainte de cisaillement pour délaminer le cristal de vermiculite afin de former une suspension de plaquettes de vermiculite délaminées.

2. Procédé selon la revendication 1 caractérisé en ce que les cristaux de vermiculite sont traités par immersion dans un bain de traitement contenant une solution aqueuse d'un sel de l'agent de chélation anionique et une solution aqueuse d'un sel du cation.

3. Procédé selon la revendication 1 ou 2, caractérisé en ce que l'agent de chélation contient au moins une partie acide.

4. Procédé selon la revendication 1, 2 ou 3, caractérisé en ce que l'agent de chélation contient au moins un groupe acide phosphorique, phosphonique, sulfonique ou carboxylique.

5. Procédé selon l'une quelconque des revendications précédentes, caractérisé en ce que l'agent de chélation est un acide polycarboxylique.

6. Procédé selon l'une quelconque des revendications précédentes caractérisé en ce que l'agent de chélation est un anion d'éthylènediamine acide tétraacétique, d'acide nitrilotriacétique, de cyclohexane acide trans-1,2-diaminotetraacétique, d'acide lactique, d'acide oxalique, d'acide tricarballylique ou d'hydroxyéthyléthylènediamine acide tétraacétique.

7. Procédé selon l'une quelconque des revendications précédentes, caractérisé en ce que l'agent de chélation est de l'éthylènediamine acide tétraacétique.

8. Procédé selon l'une des revendications précédentes, caractérisé en ce que l'agent de chélation est capable de séquestrer des ions magnesium ou calcium.

9. Procédé selon l'une quelconque des revendications précédentes caractérisé en ce que le cation est un cation N-alkylammonium ayant de 3 à 6 atomes de carbone dans chaque groupe alkyle, une forme cationique d'un amino-acide, ou bien un cation lithium.

10. Procédé selon la revendication 1 caractérisé en ce que les cristaux de vermiculite sont traités simultanément avec l'agent de chélation anionique et le cation.

11. Procédé selon l'une des revendications précédentes caractérisé en ce que les cristaux de vermiculite sont traités par immersion dans un bain de traitement comprenant une solution aqueuse d'un sel d'agent de chélation du cation.

12. Procédé selon l'une des revendications précédentes, caractérisé en ce que le cation est le lithium.

13. Procédé selon l'une quelconque des revendications précédentes caractérisé en ce que les cristaux de vermiculite sont traités par immersion dans un bain de traitement contenant une solution comprenant l'agent de chélation anionique suivant une concentration allant de 0,02 N. jusqu'à une concentration de saturation.

14. Procédé selon la revendication 13, caractérisé en ce que la concentration de l'agent de chélation anionique est comprise entre 0,5 N. et 4 N.

15. Procédé selon la revendication 11 caractérisé en ce que la concentration du sel d'agent de chélation du cation est comprise entre 0,5 N. jusqu'à une concentration de saturation.

16. Procédé selon la revendication 11 caractérisé en ce que la concentration du sel d'agent de chélation, qui n'est pas du citrate, du cation est comprise entre 0,5 N. et 4 N.

17. Procédé selon l'une quelconque des revendications précédentes caractérisé en ce que la concentration des plaquettes de vermiculite dans la dispersion formée par cisaillement de la vermiculite gonflée, est moindre que 15 % sur la base du poids de la dispersion.

18. Procédé selon la revendication 17 caractérisé en ce que la concentration des plaquettes de vermiculite est comprise entre 4 % et 12 %.

19. Procédé selon l'une quelconque des revendications précédentes, caractérisé en ce que l'agent de chélation anionique qui n'est pas du citrate empêche sensiblement la précipitation ou le dépôt des plaquettes depuis la dispersion.

20. Procédé pour augmenter le taux et l'étendue du gonflement des particules de minerai de vermiculite qui consiste :
(a) à traiter des particules de minerai de vermiculite avec (a) un cation qui provoque le gonflement des particules dans une direction normale à leur plan de clivage principal pendant une immersion dans l'eau après le traitement et (b) un agent de chélation anionique non-citrate qui augmente le taux et l'étendue de gonflement effectué par le cation ;
(b)à immerger les particules traitées dans l'eau ; et
(c)à permettre aux particules immergées de gonfler.

21. Dispersion aqueuse comprenant des plaquettes de vermiculite délaminées et un agent de chélation anionique non-citrate, qui peut être obtenue par un procédé tel que revendiqué dans l'une quelconque des revendications précédentes.

22. Procédé selon l'une quelconque des revendications 1 à 20, suivie par la préparation à partir de la dispersion aqueuse obtenue d'un revêtement ou film auto-supportant.
